# EUROPEAN PATENT APPLICATION

(11) **EP 4 841 587 A1**
(43) Date of publication of application: **18.11.2026**
(21) Application number: 25176057.5
(22) Date of filing: 13.05.2025
(51) Int. Cl.: G06V 20/56

(54) **COMPUTER-IMPLEMENTED METHOD TO DETERMINE A DISPLAY INFORMATION FOR A SURROUND VIEW SYSTEM FOR A VEHICLE**

(71) Applicant: Connaught Electronics Ltd., County Galway H54 Y276 (IE)
(72) Inventor: RAMACHANDRAN, Vishnu, 600130 Chennai, Tamil Nadu (IN); GUPTA, Rachana, Tuam, H54 Y276 (IE); JUDITH, Linda, 600130 Chennai, Tamil Nadu (IN)
(74) Representative: Jauregui Urbahn, Kristian

(57) **Abstract**

The invention relates to a computer-implemented method to operate a surround view system (2) for a vehicle (1), comprising: providing an environment information (15) describing an environment of the vehicle (1); providing a vehicle information (18) describing a driving situation of the vehicle (1); determining an object information (21) describing at least one object (11) in the environment; determining a state information (23) describing a combined current state of the vehicle (1) and the environment in form of a multidimensional vector; determining a display information (25) describing at least one image (13, 14) to be displayed in the vehicle (1) by applying a display information determination algorithm (26) based on machine learning techniques at least on the state information (23). The method may comprise operating the surround view system (2) under consideration of the display information (25).

## Description

The invention relates to a computer-implemented method to determine a display information for a surround view system for a vehicle. Besides, the invention relates to a control device, a vehicle and a computer program product to perform such a computer-implemented method.

A vehicle may comprise a surround view system. The surround view system may be understood as a driver assistance system that displays at least one image of at least a part of an environment of the vehicle and/or at least a part of the vehicle itself in the vehicle. The displayed image may be an artificial image that is determined based on at least one camera image from a surround view camera system of the vehicle.

Document US 2021/312203 A1 discloses a method to project images captured using fisheye lenses for feature detection in autonomous machine applications. Sensor data generated by a sensor may be adjusted to represent a virtual field of view different from an actual field of view of the sensor. The sensor data may be applied to a stereographic projection algorithm to generate a projected image.

Document US 2020/0276933 A1 discloses a surround view system that comprises a surround image sensing module which obtains images of surrounding view and output image data. The surround view system comprises a vehicle status retrieval module which retrieves vehicle status information, a processing module which generates adaptive surround view based on the image data and the vehicle status information, and an outputting module which outputs the adaptive surround view.

The surround view system typically uses a rule-based algorithm to decide which part of the environment and/or vehicle is to be described by the at least one displayed image and when to change the displayed image or images. Decisions of the rule-based algorithm are predefined and may not be adapted to a current situation.

The object of the invention is to provide a display information for a surround view system for a vehicle that dynamically adapts to a current situation.

The independent claims solve the object.

A first aspect of the invention relates to a computer-implemented method to operate a surround view system for a vehicle. A control device of the vehicle, such as an electronic control unit (ECU) of the vehicle, may perform the computer-implemented method. The surround view system may be understood as a driver assistance system of the vehicle. The surround view system is configured to display at least one image in the vehicle. The at least one image may be displayed by a display device in the vehicle. The display device in the vehicle may be a component of the vehicle, such as a screen, and/or a mobile device that is currently located in the vehicle. The mobile device may be a smartphone and/or a tablet.

The computer-implemented method comprises providing an environment information. The environment information describes an environment of the vehicle. The environment information may be or may comprise the at least one camera image from a surround view camera system of the vehicle. Alternatively or additionally, the environment information may comprise at least one camera image captured by at least one further camera of the vehicle that is not comprised by the surround view camera system. The further camera may be a planar front camera located at an upper end of a windshield of the vehicle, for example. Alternatively or additionally, the environment information may comprise at least one point cloud. At least one ultrasonic sensor, radar device and/or a LiDAR (Light Detection and Ranging) device of the vehicle may capture the at least one point cloud. In a preferred example, the environment information comprises multiple camera images and point clouds so that it covers a 360-degree view of the environment of the vehicle. The environment may be spatially limited to a coverage area of the surround view camera system, the further camera, the ultrasonic sensor, the radar device and/or the LiDAR device.

The computer-implemented method comprises providing a vehicle information. The vehicle information describes a driving situation of the vehicle. The driving situation may be understood as a current driving state and/or as a driving condition of the vehicle. The vehicle information may be understood as data that describe how the vehicle is driving or how the vehicle plans to drive. In an example, the vehicle information may describe a speed, steering angle, a driving direction and/or an acceleration of the vehicle. Alternatively or additionally, the vehicle information may describe, for example, a gear engaged in the vehicle.

Providing in the sense of the invention may be understood as receiving or being accessible to the control device that performs the computer-implemented method.

The computer-implemented method comprises determining an object information. The object information describes at least one object in the environment. The object may be an obstacle that is located along a driving path of a vehicle or any item that may be located in the environment. The object information may describe a class or category of the at least one object and/or an arrangement of the at least one object in the environment, in particular relative to the vehicle. The arrangement may comprise at least a distance between the object and the vehicle. The distance may be given in relation to a reference point at a front, at a rear and/or at each side of the vehicle.

The object information is determined by applying an object determination algorithm on the environment information. In a preferred example, the object determination algorithm is applied only on the at least one camera image comprised by the environment information that describes at least partially the object. The object determination algorithm may be based on object detection and/or object identification techniques. In an example, the object detection algorithm comprises at least one rule and/or criterion that is applied on the environment information to determine the object information. The object determination algorithm may be a rule-based algorithm or an algorithm based on machine learning techniques. In case the object determination algorithm is based on machine learning techniques, it may comprise at least one artificial neural network that is trained on detecting the at least one object in an environment information, such as at least one camera image and/or point cloud.

The computer-implemented method comprises determining a state information. The state information describes a combined current state of the vehicle and the environment. The state information is determined by applying a state determination algorithm on the vehicle information and the object information. In an example, the state determination algorithm comprises at least one rule and/or criterion that is applied on the vehicle information and the object information to determine the state information. The state determination algorithm may be a rule-based algorithm. In another example, the state determination algorithm may at least partially be based on machine learning techniques. In case the state determination algorithm is based on machine learning techniques, it may comprise at least one artificial neural network that is trained on determining the current state of the environment and the current state of the vehicle in a combined way. In an example, the state determination algorithm may be applied on the environment information as well to determine the state information.

The state information is in the form of a multidimensional vector. This means that the state information may be understood as data describing multiple individual details about the environment and the vehicle as entries of the multidimensional vector. The state information is thus given as the multidimensional vector. In other words, the multidimensional vector is a geometric object that is chosen to define the state information in the sense of the invention. The multidimensional vector is a vector with multiple individual entries, wherein each entry may describe at least a part of at least one detail about the combined current state of the environment and the vehicle. The state information describes in other words a situation affecting the environment and the vehicle at a current time. The state of the environment and the vehicle is hereby at least affected by the at least one object described by the object information and by the driving situation of the vehicle described by the vehicle information. In an example, the state information may describe the distance between the at least one object in the environment and the vehicle, the class or category of the at least one object, a driver input, and/or a vehicle dynamics parameter, wherein each one of these details may be described by at least one assigned entry of the multidimensional vector. The state information may describe other or further details about the environment and/or the vehicle. The state information may be understood as a superordinate data structure that comprises all entries of the multidimensional vector and thus all available details on the combined current state of the environment and the vehicle.

The computer-implemented method comprises determining a display information. The display information describes at least one image to be displayed in the vehicle. The at least one image described by the display information may be displayed by the display device when operating the surround view system, for example. The at least one image that is described by the display information describes at least a part of the environment and/or at least a part of the vehicle. The at least one image is determined based on at least one camera image from the surround view camera system of the vehicle. The at least one image is in a preferred example an artificially created image that at least partially differs from the at least one camera image captured by the surround view camera system. Thus, the at least one image may be understood as an artificial or virtual image. The surround view camera system may capture a 360-degree image of an environment of the vehicle. The surround view camera system may comprise at least one camera with a fisheye lens. In particular, it may comprises at least four individual cameras with fisheye lenses distributed around the vehicle.

The display information may be understood to as a representation of a view of the at least part of the environment and/or the at least part of the vehicle in the environment. In a preferred example, the at least one image may be in bowl shape view or in bird's eye view. This means that the at least one image may be a virtual view in a three-dimensional bowlshaped projection of the environment, wherein the environment is described by the at least one camera image captured by the surround view camera system. Alternatively or additionally, the at least one image may be a virtual view in a two-dimensional bird's eye view projection of the environment, wherein the environment is described by the at least one camera image captured by the surround view camera system. Additionally, a three-dimensional or two-dimensional image of the vehicle or at least a part of the vehicle may be added to the at least one image, so that the virtual view comprises a view on the vehicle or the part of the vehicle. However, the image of the vehicle or the part of the vehicle may be only added if the virtual view views or sees the vehicle or the part of the vehicle from the outside. If the virtual view does not view or see the vehicle or the part of the vehicle from the outside, no image of the vehicle or the part of the vehicle may be added to the at least one image described by the display information.

The display information is determined by applying a display information determination algorithm at least on the state information. In an example, the display information determination algorithm may as well be applied on the environment information, the vehicle information and/or the object information. The display information determination algorithm is based on machine learning techniques. This means that the display information determination algorithm may comprise, for example, at least one artificial neural network that is trained on determining the display information if at least the state information is fed to the display information determination algorithm. The display information determination algorithm may apply contextual weighting to prioritize relevant parts of the environment and/or the vehicle so that the determined display information describes the image or images that cover these relevant parts of the environment and/or the vehicle.

A decision whether the at least one image is in bowl shape view or in bird's eye view is made by the display information determination algorithm. This means that the display information determination algorithm may decide based on the state information and thus based on details about objects in the environment and the driving situation of the vehicle, if the at least one image to be displayed in the vehicle is in bowl shape view or in bird's eye view. The display information determination algorithm may decide when a view change should take place, meaning that for example first the at least one image is in bowl shape view and afterwards the at least one image is in bird's eye view or vice versa. Moreover, the display information determination algorithm decides based on the state information which at least part of the environment of the vehicle and/or which at least part of the vehicle is described by the at least one image. The display information determination algorithm thus decides a perspective or view on the at least part of the environment and/or the at least part of the vehicle.

In summary, the computer-implemented method comprises detecting the at least one object in the environment to determine the combined current state of the vehicle and the environment under consideration of the at least one detected object and details about the driving situation of the vehicle. Then, the at least one image is determined that may be displayed in the vehicle during operating the surround view system. However, the at least one image is not determined using a rule-based algorithm but by applying the display information determination algorithm that is based on machine learning techniques. The used algorithm is thus dynamically adaptable to the current situation the vehicle is exposed to. In order to take the current situation into account, the display information determination algorithm is applied at least on the state information and thus the combined current state of the vehicle and the environment. As a result, the display information describes an image that is useful for the driver at the current time. The computer-implemented method hence provides the display information for a surround view system for the vehicle that dynamically adapts to the current situation.

According to an embodiment, the computer-implemented method comprises operating the surround view system based on the display information. For example, the surround view system is operated in such a way that the determined display information and thus the at least one image described by the display information is displayed in the vehicle. The at least one image according to the display information may be displayed by the display device in the vehicle. In an example, the display device displays more than one image, for example two images. In this example, the display information describes two or more images.

A manual driver override of the displayed image or images may be possible. This means that the driver may have the option to manually change or switch the displayed image or images if he or she want another part of the environment and/or vehicle to be displayed in the vehicle. The manual driver override may be performed after receiving or detecting a corresponding user input of the driver in the vehicle.

An embodiment comprises that the display information determination algorithm comprises at least one artificial neural network. The artificial neural network has been trained in advance using deep reinforcement learning. The display information determination algorithm is thus trained when performing the computer-implemented method. Deep reinforcement learning combines reinforcement learning and deep learning. Reinforcement learning is configured to train an intelligent agent so that the intelligent agent takes actions in a dynamic environment in order to maximize a reward. Deep learning refers to the training and use of multiple layers in the artificial neural network. Deep reinforcement learning is configured to take into account large inputs such as the state information to decide what actions to perform to optimize an objective. The objective is here the task to determine the display information and thus the at least one image. Using deep reinforcement learning allows precise training of the display information determination algorithm over time.

Another embodiment comprises that during at least a first training phase of a training process of the at least one artificial neural network of the display information determination algorithm using deep reinforcement learning, an agent, meaning the intelligent agent, determines the display information and receives a reward information. The reward information describes a user evaluation of the determined display information. The reward information may be received during the first training phase or even during the entire training process. The user evaluation may be understood as a user input that describes a valuation or rating of the determined display information. A user does or provides the valuation or the rating. The user may be a driver of the vehicle, such as the current driver and/or a past driver.

In an example, the surround view system may display one or more images described by the determined display information and ask the user for feedback. An operating unit in the vehicle, such as a touch screen, a knob, a button and/or a key, may receive the user evaluation, meaning the feedback. The operating unit may be a component of the vehicle and/or of the mobile device located in the vehicle. The user may receive a request to provide the user evaluation for the displayed image or images and thus for a display information determined by the display information determination algorithm. Then, an operation of the operating unit is detected and analyzed to determine the reward information. By providing the user evaluation as the reward information, the intelligent agent may learn a policy or map from observations to actions in order to maximize the reward, meaning the received reward information. As a result, the display information determination algorithm is trained to adapt dynamically to preferences of the user, such as the current driver.

The manual driver override of the displayed image or images, meaning if the driver manually changes the displayed image or images, may be described by the user evaluation. In this case, the displayed image or images may be associated with a low or a lowest user evaluation.

In an example, the user may determine the at least one image that is displayed by the display device. The image chosen by the user may then be an image that is associated with a high or a highest user evaluation possible. The user may determine the image by navigating manually in a displayed overview image of the environment and the vehicle. For navigating, the user may operate the touch screen of the display device by wiping, tapping, and/or other finger movements. In this example, the training process uses shadow mode learning. In the background, the display information determination algorithm determines the display information. However, the determined display information is not displayed but is compared to the image chosen by the user. Besides, the vehicle information and/or the object information may be considered when analysing a deviation between the determined display information and the manually chosen image or images. The display information determination algorithm is then trained under consideration of this analysis and may adapt to driver preferences.

In other words, the display information determination algorithm continuously learns from driving scenarios and feedback from the driver, improving its decisions over time. It therefore may adapt to different driving styles or environments. The display information determination algorithm may be trained by simulating various driving scenarios, such as parking and reversing, where it learns to choose the most relevant display information based on the environment, meaning the state information. The display information determination algorithm receives feedback through a reward function, getting positive rewards for selecting helpful images, like showing a rear area in relation to the vehicle while reversing, and negative rewards for poor choices, like switching to irrelevant images and thus to an image of an irrelevant part of the environment and/or vehicle. Over time, the display information determination algorithm learns to optimise its decisions by continuously improving based on this feedback and in particular based on the user evaluation. As the display information determination algorithm experiences more situations, it becomes better at adapting and selecting the best display information in real-world scenarios.

The display information determination algorithm may use Q-learning which is a type of reinforcement learning. The at least one artificial neural network of the display information determination algorithm may determine multiple display information when it is applied on the state information. Besides, the at least one artificial neural network may determine a Q-value for each one of the multiple display information. The Q-value may describe an evaluation of the display information. The surround view system may then be operated under consideration of the display information with the highest Q-value.

During the training process of the at least one artificial neural network, a reinforcement learning algorithm that may be understood as a part of the display information determination algorithm may calculate the reward information for each display information and thus for each determined Q-value. The intelligent agent then may re-determine the Q-value for the display information determined by the artificial neural network. This means that the reinforcement learning algorithm may determine the Q-value for the display information or the Q-values for the multiple display information. During the training process, a difference between, for example, the Q-value determined by the at least one artificial neural network and the Q-value determined by the argent is minimized.

In an example, the reward information may be calculated under consideration of a correct image information, an object avoidance information, and a driver evaluation information. The correct image information may describe how well the at least one image matches the current situation, in particular the driving situation of the vehicle. The object avoidance information may describe if and how the at least one object in the environment is visible in the image. The driver evaluation information may describe the user evaluation. In particular, it describes if the manual driver override occurred or not. The reward information may be the sum of the correct image information times a first weight, the object avoidance information times a second weight, and the driver evaluation information times a third weight. The weights may differ from each another or may be partially or completely equal. In a preferred example, the reward information for the display information determined by the at least one artificial neural network of the display information determination algorithm is optimized, in particular maximized, after the training process.

According to another embodiment, the vehicle information describes the driving situation of the vehicle under consideration of at least one control input from a driver of the vehicle and/or at least one driving dynamics parameter of the vehicle. In an example, the vehicle information is determined by a driver input of the current driver of the vehicle. In this example, the control input may comprise detected manual control commands for a steering system, a drive system and/or a brake system of the vehicle. The manual control command may be detected by a steering wheel sensor, a drive pedal sensor, a brake pedal sensor, and/or another sensor configured to detect a steering input, braking input and/or an acceleration input from the driver. Alternatively or additionally, the at least one control input may describe the gear that was engaged by the driver. The gear may differentiate between a reverse gear and a forward gear.

The at least one driving dynamics parameter may describe a current driving state of the vehicle. The driving dynamics parameter may correspond to the control input or may at least partially differ from the control input. The driving dynamics parameter may describe the engaged gear, the current steering angle, the current speed, the current acceleration and/or another parameter that describes a current movement of the vehicle. As a result, the vehicle information describes in detail the current situation of the vehicle and is therefore particularly useful to determine the state information.

According to a further embodiment, the determined display information describes an image that at least covers a rear area and/or at least one side area in relation to the vehicle if the state information describes that the speed of the vehicle is below a predetermined speed threshold. In a situation in which the speed of the vehicle is relatively low and thus below the predetermined threshold, the at least one image described by the display information focuses at least on the rear area and/or the at least one side area. Such a situation occurs, for example, when parking the vehicle. The speed threshold may be, for example, 5 kilometers per hour, 10 kilometers per hour, 15 kilometers per hour, 20 kilometers per hour, or 30 kilometers per hour. Speed thresholds between the listed numbers, or lower than the listed numbers, or higher than the listed numbers are possible.

The display information thus focuses on the rear and the at least one side when driving at low speed and in particular does not focus on a front area in relation to the vehicle. In an example, the image covers only the rear and the at least one side. The reason for this is that at low speed, objects in the rear and/or at the side of the vehicle may be of more interest for the driver than objects in the front because the front is easily visible, and because low speed may be related to performed or planned parking. It is thus possible to implement reasonable predetermined relationships between at least the vehicle information and the display information.

An area in relation to the vehicle may be understood as an area that may be a part of the environment and/or a part of the vehicle. For example, the rear area in relation to the vehicle may be an area behind the vehicle and/or the rear of the vehicle. This may be understood analogously for the at least one side area in relation to the vehicle and the front area in relation to the vehicle.

According to another embodiment, the determined display information describes an image that at least covers a rear area in relation to the vehicle if the state information describes that a reverse gear is engaged in the vehicle. In an example, the image covers only the rear area. The display information thus focuses on the rear when driving backward or when backward driving is planned. The reason for this is that when the reverse gear is engaged, objects in the rear may be of more interest for the driver than objects in the front and/or at the sides because the vehicle is driving or plans to drive towards the rear area. It is thus possible to implement reasonable predetermined relationships between at least the vehicle information and the display information.

In an example, the determined display information describes an image that at least covers a rear area in relation to the vehicle if the state information describes that the speed of the vehicle is below the predetermined speed threshold and that the reverse gear is engaged in the vehicle. The image may only cover the rear area. The speed may be described by a speed information that is then compared to the predetermined speed threshold to determine if the speed of the vehicle is below the predetermined speed threshold. Such a state information is particularly typical for parking and thus for a situation in which the rear area in relation to the vehicle is of high interest for the driver.

Moreover, an embodiment comprises that the determined display information describes an image that at least covers additionally to the rear area at least one side area in relation to the vehicle if the state information describes that the reverse gear is engaged and that at least one object is located in the at least one side area. This means that if there is at least one object at one of the sides of the vehicle, this object may be understood as a potential obstacle for the vehicle and is thus located in a region of interest that should be described by the image. If there is at least one objects in both side areas, the image may cover the rear area as well as both side areas in relation to the vehicle. In an example, the image covers only the rear area and the at least one side area. It is thus possible to implement reasonable predetermined relationships between the vehicle information and the object information on one hand and the display information on the other hand.

Another embodiment comprises that the determined display information describes an image that at least covers the front area and/or at least one side area in relation to the vehicle if the state information describes that a forward gear is engaged in the vehicle. If the vehicle is driving in a forward direction or plans to drive forward, the display information focuses on the front area and/or at least one of the side areas in relation to the vehicle. In an example, the image covers only the front area and/or the at least one side area. This is particularly useful because when the engaged forward gear indicated that no backward driving is planned so that the display information may focus on the front and/or side area. It is thus possible to implement reasonable predetermined relationships between the vehicle information and the display information.

Furthermore, an embodiment comprises that the determined display information describes an image that focuses on the front area if the state information describes that the vehicle is driving straight ahead. It is assumed that the forward gear is engaged according to the state information. This means that if the vehicle is driving straight ahead without turning, the side areas and the rear area in relation to the vehicle are of little interest for the driver and may be ignored by the display information. In an example, the image covers only the front area.

Alternatively, the determined display information describes an image that focuses on the at least one side area, if the state information describes that the vehicle is steering towards at least one object that is located in the at least one side area. It is assumed that the forward gear is engaged according to the state information. This means that if the steering angle is larger than zero while a forward movement is performed or planned, the side towards the vehicle is driving or plans to drive is considered as a region of interest for the driver. Therefore, the image covers the at least one side area with the object. In an example, the image covers only the at least one side area. If there is at least one objects in both side areas, the image may cover both side areas in relation to the vehicle. This means that the display information determination algorithm may consider various situations and is thus particularly versatile.

According to an embodiment, the computer-implemented method comprises continuously determining the display information. This means that the display information is determined multiple times, for example, in predetermined time intervals. Therefore, the steps of the computer-implemented method before determining the display information may be performed continuously as well. As a result, the surround view system may be operated under consideration of the continuously determined display information. Therefore, changes in perspective on the at least part of the environment and/or the vehicle may occur between consecutively determined display information.

The method comprises verifying if the determined display information are affected by a change in perspective on the at least part of the environment and/or the vehicle. Change in perspective means that, for example, an angle with which the image describes the at least part of the environment and/or the vehicle is changed in a way that the perspective of a first display information and the perspective of a consecutive second display information differ by more than a predetermined perspective threshold. Alternatively, change in perspective may mean that a view on the at least part of the environment and/or the vehicle is changed in a way that the perspective of a first display information and the perspective of a consecutive second display information differ by more than the predetermined perspective threshold. If, for example, the first display information is determined before the second display information and between the first display information and the second display information the change in perspective occurs, this is determined in this verification step of the computer-implemented method.

If the determined display information are affected by the change in perspective, a transition algorithm is applied at least on the first display information determined before the change in perspective and the second display information determined after the change in perspective. The transition algorithm is applied to determine a transition information that describes a transition between the first display information and the second display information. The transition information thus describes that the change in perspective occurs and may comprise details about the chance in perspective. The transition algorithm may be a rule-based algorithm and/or may use machine learning techniques. The transition algorithm comprises at least one rule and/or criterion that is applied on the display information to determine the transition information, for example. In other words, the transition algorithm is applied on consecutively determined display information to determine a change in perspective between the consecutively determined display information. The transition information then describes the transition between the consecutively determined display information between which the change in perspective occurred.

The computer-implemented method comprises operating the surround view system under consideration of the transition information. The transition information is thus an additional information that is provided to the surround view system. The transition information may be used by the surround view system to display at least one transition image between, for example, the first display information and the second display information. The transition information may describe a transition movement between the image described by the first display information and the image described by the second display information. The transition movement may follow a line that connects these images, meaning that connects the image described by the first display information and the image described by the second display information. The line may be a linear line or a parametric curve such as a Bézier curve. The line may start at a specific point, such as a center point, in the image described by the first display information. The line may end at a specific point, such as a center point, of the image described by the second display information. The transition information may be understood as multiple images, such as a video, that describe the movement along the line between the first display information and the second display information. For example, if the change in perspective is determined because the first display information describes an image that covers a first side area as well as the rear area in relation to the vehicle, and the second display information describes an image that covers an opposite second side area and the front area in relation to the vehicle, the transition information may describe a movement from the first side area to the second side area.

In another example, the transition information may describe a fading-out of the image described by the first display information and a fading-in of the image described by the second display information. The fading-in and fading-out result in a smooth transition between the consecutively displayed images although the change in perspective occurs. The transition information is determined to illustrate the change in perspective in a way that the driver may intuitively understand. Therefore, it may be avoided to confuse the driver by a sudden change in perspective.

An embodiment comprises that a transition duration information is determined. The transition duration information describes a duration of the transition according to the transition information. The transition duration information is determined by applying a transition duration algorithm on at least the display information. In an example, the transition duration information is determined by applying the transition duration algorithm on even more information, such as the vehicle information, the transition information, the object information and/or the state information. The determined transition duration information is considered when operating the surround view system for the vehicle. For example, the transition duration algorithm may consider a difference between the images and then determine a transition duration information that describes a shorter duration of the transition compared to a situation in which the images according to the first display information and the second display information differ less from each other. In another example, the transition duration algorithm may consider a sudden appearance of a moving object in the environment of the vehicle and then determine a transition duration information that describes a shorter duration of the transition compared to an environment without the moving object. It is thus possible to adapt a speed of the transition between the first display information and the second display information to at least the determined display information, in particular to the at least one object in the environment. This is particularly useful to adapt dynamically to the current situation in the environment of the vehicle.

The transition duration algorithm may be a rule-based algorithm and/or may use machine learning techniques. The transition duration algorithm comprises at least one rule and/or criterion that is applied on the display information and may as well be applied on the vehicle information, the transition information, the object information and/or the state information to determine the transition duration information, for example.

According to another embodiment, a frequency information is determined. The frequency information describes a frequency of changes in perspective. The frequency information thus describes an amount of changes in perspective per time. The frequency information is determined, for example, by applying a frequency information determination algorithm on at least the transition information. The frequency information determination algorithm may be a rule-based algorithm and/or may use machine learning techniques. The frequency information determination algorithm comprises at least one rule and/or criterion that is applied on the transition information to determine the frequency information, for example.

If the determined frequency information is larger than a predetermined frequency threshold, the display information determination algorithm switches to a stability mode. In the stability mode, the determined display information is less affected by the change in perspective so that a re-determined frequency information is below the predetermined frequency threshold. In other words, a number of changes in perspective is reduced in the stability mode compared to a standard mode that is used when the stability mode is not used. As a result, if the frequency information is determined again and thus re-determined, there are fewer changes in perspective considered when operating the surround view system compared to the case that the display information determination algorithm does not switch to a stability mode. The frequency threshold may be, for example, 5 changes in perspective per minute. In alternative examples, the frequency threshold may be higher or lower. In other words, a stability correction is performed once the frequency threshold is met to stabilize the surround view system.

An information in the sense of the invention may be understood as data or may comprise data.

Another aspect of the invention relates to a control device for a vehicle. The control device is configured to perform the computer-implemented method. The control device performs the computer-implemented method.

The control device may be understood as a computing unit or as a data processing device with processing circuitry. The control device may therefore perform computing operations in order to process data and hence the computer-implemented method. The computing operations may also include indexed accesses to a data structure, for example a look-up table (LUT).

In particular, the control device may comprise at least one computer, at least one microcontroller, and/or at least one integrated circuit, for example, at least one application-specific integrated circuit (ASIC), at least one field-programmable gate arrays (FPGA), and/or at least one system on a chip (SoC). The control device may comprise at least one processor, for example, at least one microprocessors, at least one central processing unit (CPU), at least one graphic processing unit (GPU), and/or at least one signal processor, in particular at least one digital signal processor (DSP). The control device may comprise a physical or a virtual cluster of computers or other of said units.

The control device may comprise at least one hardware and/or software interface and/or at least one storage unit or memory unit. The storage or memory unit may be implemented as a volatile data memory, for example a dynamic random access memory (DRAM), or a static random access memory (SRAM), or as a non-volatile data memory, for example a read-only memory (ROM), a programmable read-only memory (PROM), an erasable programmable read-only memory (EPROM), an electrically erasable programmable read-only memory (EEPROM), a flash memory or flash EEPROM, a ferroelectric random access memory (FRAM), a magnetoresistive random access memory (MRAM), or a phase-change random access memory (PCRAM).

Another aspect of the invention relates to a vehicle. The vehicle is configured to perform the computer-implemented method. The vehicle performs the computer-implemented method. The vehicle is in a preferred example a motor vehicle, for example, a passenger car, a truck, a bus, a motorcycle and/or a moped.

Another aspect of the invention relates to a computer program product. The computer program product is a computer program. The computer program product comprises instructions which when the program is executed by a computer, such as the control device, cause the computer to perform the computer-implemented method.

The embodiments described in connection with the computer-implemented method, both individually and in combination with each other, apply accordingly, when applicable, to the control device, vehicle, and computer program product. The invention comprises combinations of the described embodiments.

The figures show:
- Fig. 1: a schematic representation of a vehicle in an environment;
- Fig. 2: a schematic representation of two images to be displayed in a vehicle;
- Fig. 3: a schematic representation of steps of a computer-implemented method to operate a surround view system; and
- Fig. 4: a schematic representation of details of a display information determination algorithm.

In the figures, same components are labeled with the same reference signs.

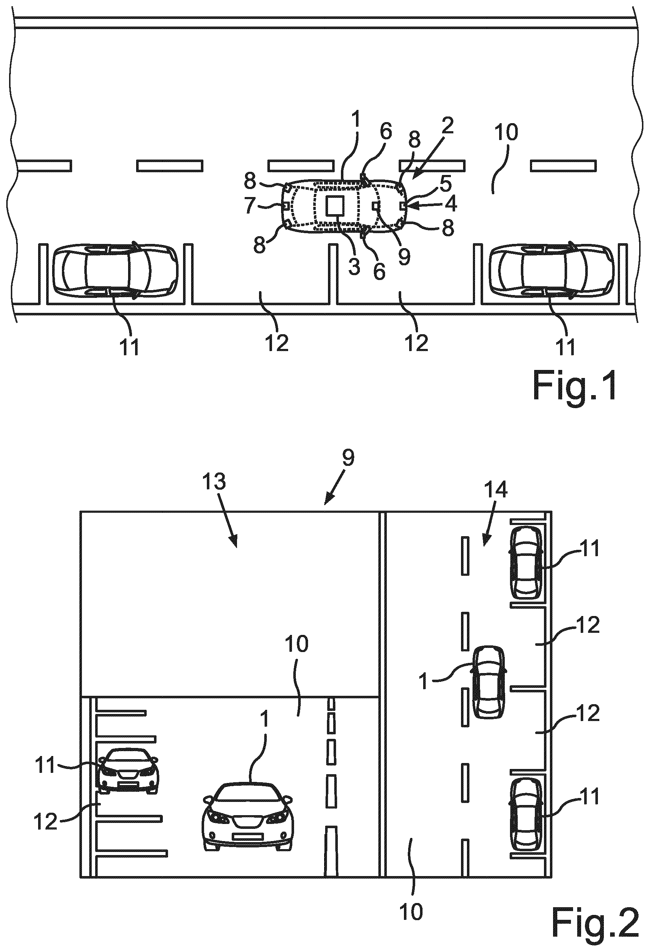

Figure 1 shows a vehicle 1 that is currently driving on a road 10. The vehicle 1 comprises a surround view system 2 for the vehicle 1 that may be understood as a driver assistance system. A control device 3 of the vehicle 1 may operate the surround view system 2. The control device 3 may perform a computer-implemented method described below.

The vehicle 1 may comprise a surround view camera system 4 that may comprise at least a front camera 5, two side cameras 6 and a rear camera 7. Alternatively, the surround view camera system 4 may comprise one camera that may be a 360-degree surround view camera. The one camera and/or the multiple cameras of the surround view camera system 4 may comprise fisheye lenses.

The vehicle 1 may comprise further environment sensors such as at least one ultrasonic sensor 8. In the sketched example, the vehicle 1 comprises multiple ultrasonic sensors 8 that are located at a front and/or at a rear of the vehicle 1. Alternatively or additionally, the vehicle 1 may comprise at least one radar device and/or LiDAR device (not sketched).

The vehicle 1 may comprise a display device 9. The display device 9 may be a component of the vehicle 1 or may be a mobile device located in the vehicle 1.

In an environment of the vehicle 1, at least one object 11 may be located. In the sketched example, two parked vehicles 1 represent two objects 11. Other objects 11 and/or more or less objects 11 are possible. Besides, there are two unoccupied parking spaces 12 between the two objects 11 in the environment. In a current situation, the vehicle 1 may park or may plan to park into one of the unoccupied parking spaces 12. Other situations are possible.

Fig. 2 shows as an example two images 13, 14 that may be displayed by the display device 9 when operating the surround view system 2 in the vehicle 1. The image 13 describes a perspective view on the vehicle 1 as well as on a part of the environment of the vehicle 1. This part comprises, for example, at least one of the objects 11. The image 13 is here in bowl shaped view. The image 14 describes the situation sketched in Fig. 1 in bird's eye view. The display device 9 may display more or less images 13, 14. Other images 13, 14 than the sketched examples are possible.

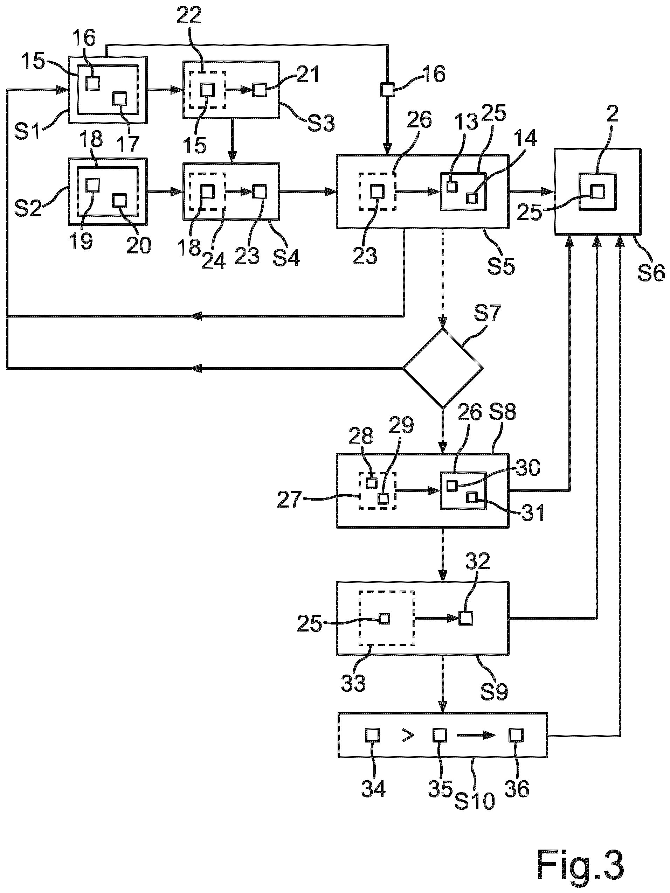

Fig. 3 shows steps of a computer-implemented method to operate the surround view system 2 of the vehicle 1. In a first step S1, the computer-implemented method comprises providing an environment information 15 describing the environment of the vehicle 1. The environment information 15 may comprise at least one camera image 16 and/or at least one point cloud 17. The camera image 16 may be provided by the surround view camera system 4 and/or by another camera of the vehicle 1, such as a planar front camera 5. The at least one point cloud 17 may be captured by the ultrasonic sensors 8 and/or the at least one radar device and/or LiDAR device of the vehicle 1.

In a step S2, the computer-implemented method may comprise providing a vehicle information 18 that describes a driving situation of the vehicle 1. The vehicle information 18 may describe the driving situation of the vehicle 1 under consideration of at least one control input 19 from a driver of the vehicle 1 and/or at least one driving dynamics parameter 20 of the vehicle 1. In an example, the vehicle information 18 describes a speed, a driving direction, an engaged gear, an acceleration, and/or a steering angle of the vehicle 1. Further or other vehicle information 18 may be possible.

In a step S3, the computer-implemented method may comprise determining an object information 21 describing at least one object 11 in the environment. The object information 21 may be determined by applying an object determination algorithm 22 at least on the environment information 15. In an example, the object determination algorithm 22 is applied on the camera image 16 and not on the point cloud 17.

In a step S4, the computer-implemented method may comprise determining a state information 23 describing a combined current state of the vehicle 1 and the environment. The combined current state is a state of the vehicle 1 but also of the environment. The state information 23 may be determined by applying a state determination algorithm 24 on the vehicle information 18 and the object information 21. The state information 23 is in the form of a multidimensional vector.

A step S5 may comprise determining a display information 25. The display information 25 describes at least one image 13, 14 to be displayed in the vehicle 1. The at least one image 13, 14 describes at least a part of the environment and/or the vehicle 1 and is determined based on the at least one camera image 16 from the surround view camera system 4 of the vehicle 1. The display information 25 is determined by applying a display information determination algorithm 26 on the state information 23. It may be applied on further information described above as well, for example.

The display information determination algorithm 26 is based on machine learning techniques. In an example, the display information determination algorithm 26 comprise at least one artificial neural network that has been trained in advance using deep reinforcement learning. The at least one artificial neural network is trained using deep reinforcement learning. During at least a first phase of the training process of the at least one artificial neural network of the display information determination algorithm 26 using deep reinforcement learning, an agent may determine the display information 25. The agent also receives a reward information describing a user evaluation of the determined display information 25. This reward information is then used during the training process. The user evaluation may be provided by the driver of the vehicle 1, in particular by a test driver that prepares the surround view system 2 before the vehicle 1 is delivered to or available to another driver.

A step S6 of the computer-implemented method may comprise operating the surround view system 2 in the vehicle 1 under consideration of the display information 25. For example, the display information 25 is then displayed by the display device 9 in the vehicle 1.

After step S5 the computer-implemented method may comprise a step S7. The step S7 may be performed when the display information 25 is determined continuously so that multiple display information 25 have been determined. The step S7 comprises verifying if the determined display information 25 are affected by a change in perspective on the at least part of the environment and/or vehicle 1. If they are affected by the change in perspective, a transition information 26 may be determined in a step S8. The transition information 26 may describe a transition between a first display information 28 determined before the change in perspective and a second display information 29 determined after the change in perspective. The transition information 26 may be determined by applying a transition algorithm 27 at least on the first display information 28 and the second display information 29. In the step S6, the surround view system 2 may be operated under consideration of the transition information 26.

The transition information 26 may describe a transition movement 30 between the image 13, 14 described by the first display information 28 and the image 13, 14 described by the second display information 29. The transition movement 30 may follow a line that connects these images 13, 14. The line may be a linear line or a parametric curve such as a Bézier curve. Alternately or additionally, the transition information 26 may describe a fading-out 31 of the image 13, 14 described by the first display information 28 and a fading-in of the image 13, 14 described by the second display information 29. The transition according to the transition information 26 may be considered when operating the surround view system 2 in the step S6. For example, the transition according to the transition information 26 may be displayed between the image 13, 14 described by the first display information 28 and the image 13, 14 described by the second display information 29.

A step S9 may comprise determining a transition duration information 32 that describes a duration of the transition according to the transition information 26. The transition duration information 32 may be determined by applying a transition duration algorithm 33 on the display information 25. Additionally, the transition duration algorithm 33 may be applied on the vehicle information 18, the transition information 26, the object information 21 and/or the state information 23. The transition duration information 32 may be considered when operating the surround view system 2 in the step S6.

A step S10 may comprise determining a frequency information 34 that describes a frequency of changes in perspective. If the determined frequency information 34 is larger than a predetermined frequency threshold 35, the display information determination algorithm 26 may switch to a stability mode 36 in the step S5 so that the determined display information 25 are less affected by the change in perspective. As a result, a re-determined frequency information 34 may be below the predetermined frequency threshold 35. Thus, the frequency information 34 may influence the step S6.

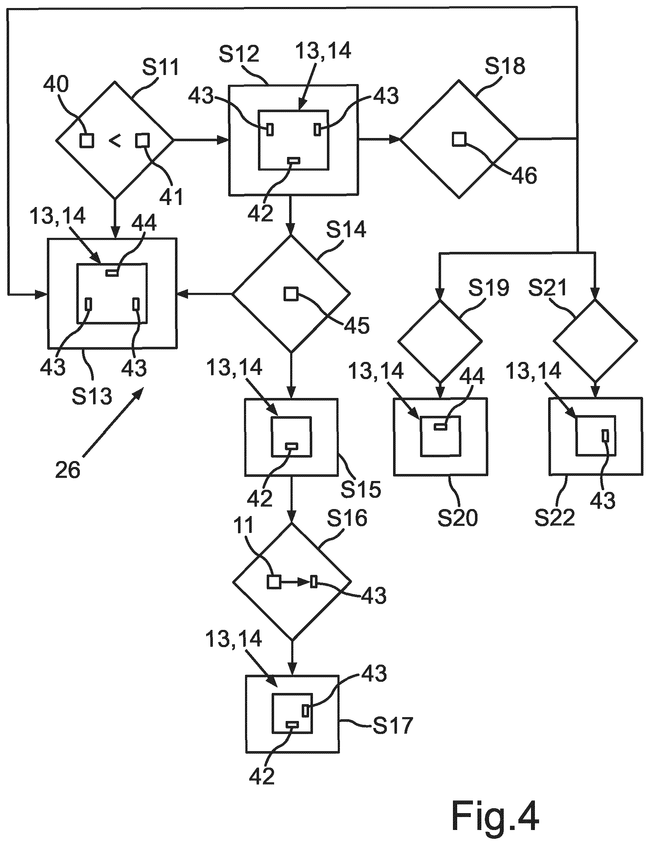

Fig. 4 shows the display information determination algorithm 26 in more detail. The determined display information 25 describes an image 13, 14 that at least covers a rear area 42 and/or at least one side area 43 in relation to the vehicle 1 in a step S12, if it is determined in a step S11 that a speed 40 of the vehicle 1 is below a predetermined speed threshold 41. This means in case of slow driving, for example at the beginning of parking, the image 13, 14 described by the display information 25 focuses on the rear area 42 and/or the at least one side area 43 in relation to the vehicle 1. If the speed 40 is higher than the speed threshold 41 or is equal to the speed threshold 41, the determined display information 25 may cover a front area 44 and/or the at least one side area 43 in relation to the vehicle 1 in a step S13.

After the step S12, it may be verified in a step S14 if a reverse gear 45 is engaged in the vehicle 1. If this is the case, the determined display information 25 may focus on the rear area 42 in relation to the vehicle 1 and not on the at least one side area 43 in a step S15. In a step S16, it may be verified if additionally to the engaged reverse gear 45 at least one object 11 is located in at least one of the side areas 43. If this is the case, the determined display information 25 may describe the rear area 42 and/or the at least one side area 43 with the object 11 in a step S17.

In a step S18, it may be verified if a forward gear 46 is engaged in the vehicle 1 according to the state information 23. If this is the case, the determined display information 26 may be the one as described for the step S13. However, it may be verified afterwards in a step S19 if the vehicle 1 is driving straight ahead. If this is the case, the display information 25 may describe an image 13, 14 that focuses on the front area 44. However, if it is determined in a step S21 that the vehicle 1 is steering towards the at least one object 11 that is located in at least one of the side areas 43, the at least one side area 43 may be focused in the image 13, 14 described by the determined display information 25 in a step S22.

In summary, the invention comprises a driver-responsive camera-based surround view system 2 using deep learning for low-speed manoeuvring. In the surround view system 2, a view selection, meaning the determination of the display information 25, happens dynamically, not only for traditional planar camera views (for example captures by the front camera 5, rear camera 7, and/or side cameras 6) but also for artificial or virtual camera views within a three-dimensional bowl shaped projection or a two-dimensional bird's eye view projection of the at least part of the environment and/or the at least part of the vehicle 1.

A key feature of the invention is an automatic view selection, meaning the automatic determination of the display information 25. The display information determination algorithm 26 automatically selects the required virtual camera view, for example within the bowl view representation, based on driving conditions (or more precisely based on the state information 23). For instance, when reversing or parking, the surround view system 2 may focus the virtual camera on the rear portion of the thee-dimensional projection, meaning on determining a display information 25 that describes at least one image 13, 14 that covers the rear area 42 in relation to the vehicle 1. Virtual camera views are generated from the stitched 360-degree surround view, allowing to zoom in or focus on specific areas of the vehicle's environment within a bowl shaped mesh. This offers better flexibility compared to planar views. The surround view system 2 may switch between different virtual angles within the bowl shaped projection to display the most relevant section of the surroundings, meaning the most relevant part of the environment. This may result in a seamless and immersive driving experience for the driver. The invention may ensure that whether it is a standard camera angle or a bowl view virtual camera, the driver always has the most relevant and helpful perspective based on real-time inputs, like obstacle proximity or steering angle, meaning based on the state information 23.

The surround view system 2 may thus dynamically switch between traditional planar camera views and virtual camera views projected onto a three-dimensional bowl shaped mesh. This is controlled by a deep reinforcement learning algorithm, meaning the display information determination algorithm 26. As a result, smooth transitions based on real-time inputs like obstacle detection, driver actions, and vehicle dynamics, meaning based on the state information 23, are ensured. Unlike a computer-implemented method that uses manual or static view selection methods, the inventive computer-implemented method continuously learns and adapts to provide seamless, immersive 360-degree visibility around the vehicle 1. As a result, it may improve safety and driver experience, especially during low-speed manoeuvres.

The surround view system 2 gathers data from vehicle sensors (cameras, ultrasonic sensors 8) and driver inputs to understand the environment of the vehicle 1. It detects and classifies obstacles or in general the at least one object 11, then uses deep reinforcement learning as the main logic to decide which camera view is most useful for the driver. The camera views are smoothly switched to provide the best visibility, especially during low-speed manoeuvres like parking. Over time, the main logic that uses deep reinforcement learning, meaning the display information determination algorithm 26, learns and improves adapting to different driving situations and driver behaviour.

The computer-implemented method starts with sensor and driver data collection. This means with the steps S1 and S2 that comprise providing the environment information 15 and the vehicle information 18. This is thus where the surround view system 2 gathers information from the vehicle's sensors (like cameras and/or ultrasonic sensors 8) and inputs from the driver (steering, gear position, and/or speed). This data will be used to make decisions about which camera view to display. Ultrasonic sensors around the vehicle 1 may measure a distance to nearby objects 11, helping to detect obstacles that are close to the vehicle 1, such as walls or other vehicles 1. The cameras around the vehicle 1, meaning the surround view camera system, capture images of the environment. These images will be used to identify obstacles like pedestrians, vehicles 1, or objects 11, providing the driver with visual information. These images and the ultrasonic sensor data may be comprised by the environment information 15. Real-time data about the driver's actions, including steering direction, whether the vehicle 1 is in reverse or forward gear, and how fast the vehicle 1 is moving are collected. This data is here comprised by the vehicle information 18. This data helps to decide which camera view is most relevant based on the driver's actions.

All the data from the sensors (ultrasonic sensors 8, cameras) and driver inputs may be combined. This creates a complete picture of the environment around the vehicle 1, helping to understand what is happening and where obstacles are located.

The computer-implemented method comprises obstacle detection and classification. Using the camera images, meaning camera images comprised by the environment information 15, obstacles around the vehicle 1 may be detected and classified into categories. The categories may comprise pedestrians, other vehicles 1, or stationary objects 11. This helps prioritise which obstacles are most important. This part of the computer-implemented method corresponds to determining the object information 21.

The computer-implemented method comprises determining a state representation based on driver and obstacle data. This means that a combined "state" is determined that includes information from both the driver (like steering and speed) and the detected obstacles. This "state" is used to make decisions about which camera view to show. The state representation is the above-described state information 23.

A central idea of the invention is a deep reinforcement learning agent for view selection, meaning the display information determination algorithm 26 for determining the display information 25. The deep reinforcement learning agent takes in the current state (driver inputs and obstacle data), meaning the state information 23, and decides which camera view to show, such as the rear view for reversing or side views for parking.

The computer-implemented method may comprise view selection for parking or low-speed. In low-speed situations, like parking, camera views that provide visibility for avoiding obstacles, such as side or rear cameras, are selected. When switching between different camera views takes place, the transition may be smooth and gradual. This prevents abrupt changes in view that might confuse the driver.

The selected camera view, meaning the at least one image 13, 14 described by the display information 25, is displayed on the vehicle's screen, meaning the display device 9, so the driver can see the relevant part of the environment.

A driver override of the displayed image 13, 14 may be allowed. This means that the driver may have the option to manually switch the displayed image 13, 14 or images 13, 14 if he or she wants the manual switch.

The display information determination algorithm 26 continuously learns from the driving scenarios and feedback, improving its decisions over time. It adapts to different driving styles or environments. The display information determination algorithm 26 may be trained by simulating various driving scenarios, such as parking and reversing, where it learns to choose the most relevant camera views, meaning display information 25, based on the environment. The display information determination algorithm 26 receives feedback through a reward function, getting positive rewards for selecting helpful views, like showing the rear area 42 in relation to the vehicle 1 while reversing, and negative rewards for poor choices, like switching to irrelevant views. Over time, the display information determination algorithm 26 learns to optimise its decisions by continuously improving based on this feedback. As the display information determination algorithm 26 experiences more situations, it becomes better at adapting and selecting the best display information 25 in real-world scenarios.

The computer-implemented method may collect real-time driver inputs like steering, gear position, and speed, along with obstacle data such as position, type, and confidence. It also processes the vehicle's state, including speed, direction, and acceleration, and combines this information into the state information 23. Contextual weighting may be applied to prioritise relevant data based on the driving situation. Finally, the state information 23 may be sent to the display information determination algorithm 26 for display information selection.

The display information determination algorithm 26 may receive the state information 23, which includes obstacle data, driver inputs, and vehicle dynamics. It evaluates the possible actions (display information 25) and selects the optimal view based on the current driving situation. After selecting a camera view, meaning the display information 25, the agent may apply a reward function, giving positive or negative feedback based on the usefulness of the selected view. The agent updates its policy based on the reward and continuously learns and improves, sending the best camera view to be displayed for the driver.

In low-speed manoeuvring, for example, the display information determination algorithm 26 first checks the vehicle's speed and prioritises rear or side cameras if the speed is low. If the vehicle 1 is in reverse gear 45, the rear view is prioritised, but side views are also displayed if obstacles (meaning objects 11) are detected nearby. If the vehicle 1 is not in reverse gear 45, side or front views are prioritised based on the driving direction, with side views showing obstacles (meaning objects 11) during turns and front views activated while moving forward. The surround view system 2 may ensure smooth transitions between camera views, meaning between displayed images 13, 14, to avoid abrupt changes that might confuse the driver.

When a camera view change is detected, meaning when a change in perspective is detected, the computer-implemented method applies an interpolation technique for a smooth transition, either using a linear or Bézier curve or a fade-in/fade-out effect, meaning by using the transition movement 30 or the fading-out 31/fading-in. The transition speed, meaning the duration of the transition, is adjusted based on the driving context, ensuring a fast or slow transition as needed. Besides, it may be checked for jitter caused by too many view changes, meaning by too many changes in perspective, and applies stability corrections if necessary. It also evaluates whether a view change threshold, meaning the frequency threshold 35, has been met to avoid unnecessary switches. Finally, it ensures a smooth transition to the new camera view meaning to a next image 13, 14.

The invention may not rely on predefined sensor-based view switching. This means that no rule-based system is used to switch camera views based on predefined conditions like gear position, speed, and obstacle proximity. Moreover, the invention may not rely on computer vision-based obstacle prediction. This means that no computer vision and motion tracking algorithms may be applied to predict obstacle movement and switch views accordingly. Furthermore, the invention may not rely on sensor fusion without artificial intelligence. This means that the invention may not combine data from the ultrasonic sensors 8, LiDAR devices, and cameras to switch views deterministically based on proximity thresholds without using artificial intelligence, meaning machine learning techniques.

In other words, the invention relates to a computer-implemented method to operate a surround view system 2 for a vehicle 1, comprising: providing an environment information 15 describing an environment of the vehicle 1; providing a vehicle information 18 describing a driving situation of the vehicle 1; determining an object information 21 describing at least one object 11 in the environment; determining a state information 23 describing a combined current state of the vehicle 1 and the environment; determining a display information 25 describing at least one image 13, 14 to be displayed in the vehicle 1 by applying a display information determination algorithm 26 based on machine learning techniques at least on the state information 23; and operating the surround view system 2 under consideration of the display information 25.

## Claims

1. Computer-implemented method to determine a display information (23) for a surround view system (2) for a vehicle (1), comprising:
- providing an environment information (15) describing an environment of the vehicle (1);
- providing a vehicle information (18) describing a driving situation of the vehicle (1);
- determining an object information (21) describing at least one object (11) in the environment by applying an object determination algorithm (22) on the environment information (15);
- determining a state information (23) describing a combined current state of the vehicle (1) and the environment in form of a multidimensional vector by applying a state determination algorithm (24) on the vehicle information (18) and the object information (21); and
- determining the display information (25) describing at least one image (13, 14) to be displayed in the vehicle (1) by applying a display information determination algorithm (26) based on machine learning techniques at least on the state information (23), wherein the at least one image (13, 14) describes at least a part of the environment and/or the vehicle (1) and is determined based on at least one camera image (16) from a surround view camera system (4) of the vehicle (1).

2. Computer-implemented method according to claim 1, wherein the surround view system (2) is operated based on the determined display information (25).

3. Computer-implemented method according to any one of the preceding claims, wherein the display information determination algorithm (26) comprises at least one artificial neural network that is trained using deep reinforcement learning.

4. Computer-implemented method according to claim 3, wherein during at least a first phase of a training process of the at least one artificial neural network of the display information determination algorithm (26) using deep reinforcement learning, an intelligent agent determines the display information (25) and receives a reward information describing a user evaluation of the determined display information (25).

5. Computer-implemented method according to any one of the preceding claims, wherein the vehicle information (18) describes the driving situation of the vehicle (1) under consideration of at least one control input (19) from a driver of the vehicle (1) and/or at least one driving dynamics parameter (20) of the vehicle (1).

6. Computer-implemented method according to any one of the preceding claims, wherein the determined display information (25) describes an image (13, 14) that at least covers a rear area (42) and/or a side area (43) in relation to the vehicle (1) if the state information (23) describes that a speed (40) of the vehicle (1) is below a predetermined speed threshold (41).

7. Computer-implemented method according to any one of the preceding claims, wherein the determined display information (25) describes an image (13, 14) that at least covers a rear area (42) in relation to the vehicle (1) if the state information (23) describes that a reverse gear (45) is engaged in the vehicle (1).

8. Computer-implemented method according to claim 7, wherein the determined display information (25) describes an image (13, 14) that at least covers additionally to the rear area (42) at least one side area (43) in relation to the vehicle (1) if the state information (23) describes that the reverse gear (45) is engaged and that at least one object (11) is located in the at least one side area (43).

9. Computer-implemented method according to any one of preceding claims, wherein the determined display information (25) describes an image (13, 14) that at least covers a front area (44) and/or at least one side area (43) in relation to the vehicle (1) if the state information (23) describes that a forward gear (46) is engaged in the vehicle (1).

10. Computer-implemented method according to claim 9, wherein the determined display information (25) describes:
- an image (13, 14) that focuses on the front area (44) if the state information (23) describes that the forward gear (46) is engaged and that the vehicle (1) is driving straight ahead; or
- an image (13, 14) that focuses on the at least one side area (43) if the state information (23) describes that the forward gear (46) is engaged and that the vehicle (1) is steering towards at least one object (11) that is located in the at least one side area (43).

11. Computer-implemented method according to any one of the preceding claims, wherein the method comprises:
- continuously determining the display information (25);
- verifying if the determined display information (25) are affected by a change in perspective on the at least part of the environment and/or vehicle (1);
- if the determined display information (25) are affected by the change in perspective, applying a transition algorithm (27) at least on a first display information (28) determined before the change in perspective and a second display information (29) determined after the change in perspective to determine a transition information (26) describing a transition between the first display information (28) and the second display information (29); and
- operating the surround view system (2) under consideration of the transition information (26).

12. Computer-implemented method according to claim 11, wherein a transition duration information (32) is determined that describes a duration of the transition according to the transition information (26) by applying a transition duration algorithm (33) at least on the display information (25), and the transition duration information (33) is considered when operating the surround view system (2).

13. Computer-implemented method according to claim 11 or 12, wherein a frequency information (34) that describes a frequency of changes in perspective is determined and if the determined frequency information (34) is larger than a predetermined frequency threshold (35), the display information determination algorithm (26) switches to a stability mode (36) in which the determined display information (25) are less affected by the change in perspective so that a re-determined frequency information (34) is below the predetermined frequency threshold (35).

14. Control device (3) configured to perform a computer-implemented method according to any one of the preceding claims.

15. Vehicle (1) configured to perform a computer-implemented method according to any one of the claims 1 to 13.

16. Computer program product comprising instructions which when the program is executed by a computer cause the computer to perform a computer-implemented method according to any one of the claims 1 to 13.
